# EUROPÄISCHE PATENTANMELDUNG

(11) **EP 1 324 247 A2**
(43) Veröffentlichungstag der Anmeldung: **02.07.2003**
(21) Anmeldenummer: 02027391.8
(22) Anmeldetag: 09.12.2002
(51) Int. Cl.: G06F 17/60, G06F 17/30

(54) **Servergesteuertes Informationsportal**

(30) Priorität: 21.12.2001 DE 10163450
(71) Anmelder: Wella Aktiengesellschaft, 64295 Darmstadt (DE)
(72) Erfinder: Herter, Matthias, Dr., 60489 Frankfurt (DE)
(74) Vertreter: Kewitz, Ansgar

(57) **Zusammenfassung**

Die Erfindung betrifft ein Verfahren und einen Server zur Bereitstellung von userspezifischen Informationen und Dienstleistungen über ein WAN, insbesondere das Internet, wobei die Informationen so aufbereitet werden, dass auf Seiten des Abrufenden lediglich eine plattformunabhängige Software zur Darstellung der Informationen benötigt wird, insbesondere ein Browser. In Abhängigkeit der Identität des Benutzers und den damit verbundenen spezifischen und gespeicherten Benutzerinformationen werden unterschiedliche Informationen und Dienstleistungen für den beruflichen Tätigkeitsbereich, insbesondere den Friseurbereich, bereitgestellt. Hierbei handelt es sich um Teaser, Online-Kalkulationen, insbesondere Buchhaltung oder Rentabilitätskostenrechner, Vertragsvorlagen, insbesondere Arbeitsvertrags- oder Leistungslohnvereinbarungen, Produktinformationen und Online-Bestellmöglichkeiten.

## Beschreibung

Die Erfindung betrifft einen Server und mehrere Verfahren zur Bereitstellung von userspezifischen Informationen und Dienstleistungen über ein WAN (Wide Area Network), insbesondere das Internet, wobei die Informationen so aufbereitet werden, dass auf Seiten des Abrufenden lediglich eine plattformunabhängige Software zur Darstellung der Informationen benötigt wird, insbesondere ein Browser.

Aufgrund der steigenden Komplexität der Hardware und der darauf laufenden Software sind kleinere Unternehmen, insbesondere Friseure, überfordert, eine EDV einzurichten, die ihren Ansprüchen genügt. Werden externe Dienstleister in Anspruch genommen, so führt das zu hohen Kosten, die oftmals in keinem Verhältnis zu den Einnahmen dieser Kleinbetriebe stehen. Ziel ist es somit, ein System bereitzustellen, das geringe Anforderungen an den Endbenutzer stellt. Dies wird immer dann erreicht, wenn Komplexität verlagert wird. Ziel ist es, ein komplexes System bereitzustellen, das auf Seiten des Endanwenders einfach zu handhaben ist und um dessen Wartung sich der Endanwender nicht kümmern muss.

Diese Aufgabe wird durch Vorrichtungen und Verfahren mit den Merkmalen der unabhängigen Ansprüchen gelöst. Vorteilhafte Weiterbildungen der Erfindungen sind in den Unteransprüchen gekennzeichnet.

So handelt es sich insbesondere um einen Server zur Bereitstellung von userspezifischen Informationen und Dienstleistungen über ein WAN, insbesondere das Internet. Dieser Server, in der Regel ein Web-Server, bereitet die Informationen so auf, dass der Client, der die Informationen abruft, lediglich mit einer plattformunabhängigen Software ausgestattet sein muss, um alle Informationen darzustellen. Vorzugsweise handelt es sich hierbei um einen bekannten Browser (ein Programm, das zur graphischen Darstellung einer interpretierbaren Sprache (z. B. HTML, XML) dient), wie er auf einer Vielzahl von unterschiedlichen Endgeräten verwendet wird. Der Benutzer meldet sich beim Server an, indem er ein entsprechendes Passwort mit einem dazugehörigen Login eingibt oder indem ein Cookie (Information, die vom Browser verwaltet wird, und auf dem Client-Rechner abgelegt wird) auf seinem Rechner abgelegt wurde, der ein automatisches Anmelden ermöglicht. Der Server hat in einem Speicherbereich benutzerspezifische Informationen abgelegt, die bei einer früheren Anmeldung gesammelt wurden. Bei diesen Informationen handelt es sich vorzugsweise um die Stellung im Betrieb, die Region und die verwendeten Marken im Betrieb. Weiterhin kann nach möglichen Umsatzzahlen gefragt werden, wenn sich diese nicht aus der Benutzung der Finanzbuchhaltung, die ebenfalls online bereitgestellt wird, ergeben. In Abhängigkeit der Identität des Benutzers werden auf der Grundlage der spezifischen Benutzerinformationen unterschiedliche Informationen und Dienstleistungen für den beruflichen Tätigkeitsbereich, insbesondere den Friseurbereich, bereitgestellt. Bei diesen Informationen handelt es sich um Teaser, Online-Kalkulationen, insbesondere Buchhaltung oder Rentabilitätskostenrechner für Personal oder den Salon oder Ergebnis-Vergleichs-Analysen (EVA), Vertragsvorlagen, insbesondere Arbeitsvertrags- oder Leistungslohnvereinbarungen, Produktinformationen und Online-Bestellmöglichkeiten.

Bei den EVA wird auf eine Datenbank zugegriffen, in der der Umsatz einer Vielzahl von Salons und weitere Größen wie Kosten oder Umsatz pro Personal abgelegt sind, um hierüber einen Durchschnitt zu ermitteln, der dann mit den Werten des Benutzers verglichen wird. Anhand dieses Vergleiches können Aussagen darüber getroffen werden, ob der Salon wirtschaftlich geführt wird.

So genannte Teaser sind entweder Werbeinformationen oder Hinweise, die einer bestimmten Kategorie zugeordnet werden können. Mit Hilfe des Personalrentabilitätskostenrechners ist es möglich, die Effizienz einzelner Angestellter zu berechnen. Weiterhin können fixe Kosten und variable Kosten einfließen. Durch Verwendung von Checklisten, die in der Form automatisiert sein können, dass sie am Ende eine Bewertung erlauben, ist es möglich, dass der Benutzer Lücken in seinem Unternehmen aufdeckt. Ein weiterer wichtiger Aspekt ist die Bereitstellung von unterschiedlichen Vertragsvorlagen, die durch Angabe von Namen und Adressen, der Vertragsparteien automatisch generiert werden. Hierbei sind besondere Vertragstypen zu berücksichtigen. Es kann sich um Verträge mit Lieferanten oder Verträge mit Angestellten handeln. So können neben Arbeitsverträgen auch Leistungslohnvereinbarungen und Trinkgelderklärungen vorbereitet sein, die von den Parteien nur noch unterzeichnet werden müssen. Diese Verträge können individuell angepasst sein, indem über einzelne Menüpunkte entschieden werden soll, welche Aspekte zu berücksichtigen sind. Erst nachdem durch die einzelnen Bereiche navigiert wurde, wird das Vertragsdokument zusammengefügt und dem Benutzer zur Verfügung gestellt. Es sind jedoch auch andere Formen der Bereitstellung von angepassten Verträgen denkbar.

Weiterhin sind Checklisten vorhanden, die für Personal, Marketing, Finanzen oder Gründung heranzuziehen sind, wobei die Auswertung durch den Server erfolgen kann. Lediglich das grafisch aufgearbeitete Ergebnis wird an den Client übermittelt, der es dann darstellt. Formularsammlung, aktuelle Rechtsprechung oder Informationen über aktuelle Trends werden ebenfalls grafisch aufgearbeitet dem Benutzer zur Verfügung gestellt.

Um eine möglichst große Plattformunabhängigkeit beim Client zu erreichen, werden Standardprotokolle und Definitionen eingesetzt, wie XML und HTML. Für grafische Simulation kann ebenfalls Flash (Grafikstandard) eingesetzt werden. Es wird darauf hingewiesen, dass andere Standards ebenfalls denkbar sind. Dies ist immer dann interessant, wenn Frisursimulationen oder Lehrmittelsimulationen durchgeführt werden. Bei einer Lehrmittelsimulation wird auf ein Lexikon zugegriffen, das in einzelnen Bereichen zur Verdeutlichung von Beispielen Simulationen bereitstellt.

Der Server ist weiterhin so ausgebildet, indem vorzugsweise entsprechende Software eingesetzt wird, dass Simulationen von Frisuren durchgeführt werden können. Die genauen Schritte bei der Simulation sind weiter unten beschrieben. Es sei jedoch darauf hingewiesen, dass die eigentliche Berechnung auf dem Server stattfindet. Hierdurch kann sichergestellt werden, dass aktuelle Haarfarben jederzeit zur Verfügung stehen. Weiterhin sind geringe Anforderungen beim Updaten gegeben. Der Benutzer hat immer die aktuellen Frisurentrends und Haarfarben zur Verfügung, da sie auf dem Server regelmäßig upgedatet werden.

In einer weiteren vorteilhaften Ausführungsform wird ein auf den Client ladbares Programm bereitgestellt. Bei diesem ladbaren Programm handelt es sich vorzugsweise um ein Programm in Java oder ActiveX. Die einzelnen veränderbaren Informationen, wie Frisurenfarben und Frisurenformen, werden durch dieses Programm vom zentralen Server geladen. Somit ist ebenfalls sichergestellt, dass immer aktuelle Informationen vorliegen. Durch diesen Ansatz kann die Rechenbelastung des Servers reduziert werden.

Bei der eigentlichen Berechnung werden bekannte Algorithmen angewandt, jedoch wird die Ausgabe in einen Kontext gebettet (HTML), ggf. komprimiert, und an den Client übertragen.

Ein weiterer Bestandteil der vorliegenden Erfindung ist ein Verfahren zur Bereitstellung von userspezifischen Informationen und Dienstleistungen über ein WAN, insbesondere das Internet, wobei die Informationen von einem Server so aufbereitet werden, dass auf Seiten eines abrufenden Clients lediglich eine plattformunabhängige Software zur Darstellung der Informationen benötigt wird, insbesondere ein Browser.

Dieses Verfahren umfasst folgende Schritte. In einem ersten Schritt wird bei der Anmeldung die Identität des Benutzers überprüft. Hierbei werden regelmäßig gesicherte Passwörter verwendet, die durch eine gesicherte Verbindung übertragen werden. Es ist jedoch auch möglich, Cookies auszutauschen. Hierbei ist jedoch darauf zu achten, dass diese verschlüsselte Informationen enthalten sollen, damit eine einfache und sichere Nutzung möglich ist.

Nachdem die Identität bestimmt worden ist, werden die Zugangsrechte ermittelt. Diese richten sich nach dem Profil, dass beim Anlegen des Benutzers eingestellt wurde. So haben zum Beispiel Besitzer eines Friseursalons weitaus mehr Aspekte zu berücksichtigen als Angestellte. Es ist ebenfalls denkbar, dass ein Freischalten erst infolge eines Identitätsnachweises und Stellungsnachweises erfolgen kann, wenn die volle Funktionsvielfalt bereitgestellt werden soll. Nachdem die Zugangsrechte bestimmt wurden, werden entsprechende Menüeinträge für Funktionen erzeugt, die wiederum in HTML eingebettet werden, um sie dann dem Benutzer bereitzustellen, indem sie übertragen werden. Es wird darauf hingewiesen, dass andere Arten von Einbettungen denkbar sind. So können z. B. XML oder andere Sprachen verwendet werden, die zum Aufbau von formatierten Informationen dienen. So ist es ebenfalls denkbar, dass Java Applets übertragen werden, die auf dem Client interpretiert werden. Hierfür muss jedoch eine entsprechende virtuelle Maschine auf dem Client vorhanden sein. Die eigentliche Funktion wird jedoch vom Server realisiert. Der Benutzer gibt lediglich durch Anklicken eines bestimmten Menüeintrages an, dass er diese entsprechende Funktion ausgeführt haben möchte. Die so übertragenen Navigationsinformationen werden durch den Browser angezeigt. Hierbei wird vorzugsweise eine hierarchische Menüstruktur gewählt. Teaser, die in Form von Werbung oder spezifischen Informationen bereitgestellt werden, sind Bestandteil des Seitenaufbaus. Weiterhin werden Eingabemasken für Online-Kalkulationen, insbesondere Buchhaltung oder Rentabilitätskostenrechner, bereitgestellt. Die vorgenommenen Eingaben werden auf dem Server entweder nur zwischengespeichert oder endgültig abgespeichert. Sollte eine Buchhaltung bereitgestellt werden, so werden die Daten dauerhaft abgelegt. Der Benutzer (Anwender) kann unterschiedliche Ablegeverfahren wählen. Diese können entweder persistent oder nur temporär sein. Vertragsvorlagen sind weiterhin ein wichtiger Bestandteil. Hierbei kann es sich entweder nur um reine Dokumente handeln, die in einem Standardformat heruntergeladen werden (PDF oder Word), oder es werden interaktiv Vertragsvorlagen erarbeitet, indem entsprechende Bedingungen abgefragt werden und Vertragspartner bestimmt werden. Bei den Vertragsvorlagen handelt es sich vorzugsweise um Arbeitsvertrags- oder Leistungslohnvereinbarungen. Weiterhin werden dem Benutzer Produktinformationen und Online-Bestellmöglichkeiten bereitgestellt. Bei der Online-Bestellung wird automatisch auf die Informationen (Lieferadresse, Kontonummer) des Benutzers zugegriffen, wodurch zusätzliche Eingaben entfallen. Weiterhin ist es denkbar, dass die vorgenommenen Bestellungen automatisch in der Buchhaltung verbucht werden. Hierdurch kann der Arbeitsaufwand enorm reduziert werden. Um diese Aktionen alle auf dem Server ausführen zu können, werden die vom Benutzer vorgenommenen Aktionen über das Netzwerk übertragen. Bei diesen Informationen handelt es sich vorzugsweise um kurze Informationen über die vorgenommenen Aktionen bzw. die vorgenommenen Eingaben. Es versteht sich von selbst, dass alle diese Informationen verschlüsselt werden. Um diese Verschlüsselung zu ermöglichen, werden bekannte Verfahren eingesetzt, wie sie aus Browsern bisher bekannt sind (z. B. SSL).

Nachdem die Informationen beim Server eingetragen sind, werden sie, soweit notwendig, entschlüsselt und analysiert. Hierbei werden die Codes untersucht und entsprechende Aktionen durchgeführt. In Abhängigkeit der Ergebnisse der Analysen werden Aktionen durchführt, nämlich Auswahl von Teasern, Speicherung und Berechung von Daten für Online-Kalkulationen, Laden von Vertragsvorlagen, insbesondere Arbeitsvertrags- oder Leistungslohnvereinbarungen, Laden von Produktinformationen, Speicherung und ggf. Weiterleitung von Online-Bestellungen. Nach dem Ausführen der Aktionen werden die Ergebnisse aufbereitet und dann in der Regel als Bestätigungen der Ausführung an den Client übertragen, der diese im Browser darstellen kann.

Wie bereits oben beschrieben wurde, können weitere Informationen bereitgestellt werden, die zusätzliche Erleichterungen im täglichen Alltag des Benutzers ermöglichen.

Hierbei handelt es sich um Checklisten für Personal, Marketing, Finanzen oder Gründung von Unternehmen oder um aktuelle Rechtsprechung oder Informationen über aktuelle Trends.

Ein weiterer Bestandteil der vorliegenden Erfindung ist eine Online-Simulation von Frisuren, die beim Betreiber des Servers erfolgt, wobei das Resultat beim Benutzer angezeigt wird.

Dieser Server, der zentral in einem Netzwerk angeordnet ist und der Informationen für einen Client mit einem Browser aufbereitet, führt folgende Berechnungsschritte durch. Um eine Verbindung herzustellen, muss sich der Browser beim Server anmelden. Die Anmeldung erfolgt i. d. R. durch ein bestimmtes Protokoll (http-Request).

Nach dem Anmelden werden Menü-Informationen an den Client übermittelt, mit Hilfe derer der Browser ein Menü darstellen kann. Das Menü gibt dem Benutzer die Auswahl, typische Kopfformen auszuwählen oder ein Foto vom Client herunterzuladen, wobei das Menü dem Benutzer die Auswahl von unterschiedlichen Frisuren oder Färbungen bzw. Tönungen zur Verfügung stellt. Das Foto vom Client wird regelmäßig durch eine digitale Kamera aufgenommen, sodass sich der Kunde in dem simulierten Bild wiederfindet. Durch die Verwendung eines zentralen Servers können aktuelle Frisurentrends jederzeit angeboten werden, ohne dass der Friseur bzw. der Anwender Produktupdates zu berücksichtigen haben. Hierdurch wird eine enorme Anwenderfreundlichkeit sichergestellt. Weiterhin können aufwändige Simulationen vorgenommen werden, ohne dass hierbei Rücksicht auf die Leistungsfähigkeit des PCs des Benutzers genommen werden muss. Nach der Übertragung der ausgewählten Kriterien an den Server werden diese zwischengespeichert, um dann die Simulation vorzunehmen. Zur Simulation werden bekannte Algorithmen verwendet, die zuerst den Einsatz bestimmen, die Haarstruktur und die anatomischen Besonderheiten des Haarwuchses. Nach dem Erzeugen eines Bildes auf der Grundlage der Auswahlinformationen, insbesondere der Kopfform, der Frisur und der Haarfarbe, wird das auf dem Server erzeugte Bild an den Client übermittelt, der dieses Bild im Browser darstellen kann. Bei der Übermittlung des Bildes wird auf die Auflösung Rücksicht genommen. Weiterhin werden spezielle Kompressionsverfahren verwendet, um einen möglichst schnellen Download zu ermöglichen. Bei diesen Kompressionsverfahren kann es sich um JPEG, Gif oder andere bekannte Bild-Kompressionsverfahren handeln.

In einer weiteren vorteilhaften Ausführungsform wird die Simulation auf dem Client vorgenommen, wobei das Programm jederzeit geladen werden kann und im Browser abläuft. Dies wird dadurch sichergestellt, dass eine Programmiersprache verwendet wird, die auf einer Vielzahl von Systemen läuft. Um aktuelle Informationen bereitzustellen, wird auf Dateien zugegriffen, die auf dem Server liegen und die Farben und andere Parameter für die Simulation von Frisuren bestimmen. Dieser Ansatz hat den Vorteil, dass der Server für Berechnungsaufgaben entlastet wird. Der Nachteil ist jedoch, dass eine größere Bandbreite benötigt wird, um die Programme und die Dateien schnell zu übertragen. Zur Vermeidung von Sicherheitsbedenken, wird das Programm signiert, sodass der Benutzer der Ausführung des Programmes vertrauen kann.

In allen Anwendungen erhält der Benutzer eine Bildgalerie von unterschiedlichen Simulation, sodass er im direkten Vergleich beurteilen kann, welche Frisur er auswählen möchte.

Erfolgt die Simulation an einem tatsächlichen Foto eines Kunden, so kann der Haaransatz automatisch durch den Server berechnet werden. Es besteht jedoch ebenfalls die Möglichkeit, den Haaransatz manuell zu korrigieren bzw. ihn manuell auszurichten. In einer weiteren Ausführungsform werden mehrere Fotos aus unterschiedlichen Blickwinkeln zur Verfügung gestellt, sodass ein dreidimensionales Abbild des Kopfes berechnet werden kann. Hierdurch ist es dann möglich, ein mehrdimensionales Anschauungsbild der neuen Frisur zu erzeugen. Sollten solche Fotos nicht vorhanden sein, so kann anhand von Maßangaben ein künstlicher mehrdimensionaler Kopf simuliert werden.

Ein weiterer Bestandteil der vorliegenden Erfindung ist ein Verfahren zur Steuerung der Auswahl von Teasern durch einen Informations-Server im WAN, insbesondere einem Web-Server im Internet, bei dem anhand von Benutzerinformationen personalisierte Informationen oder spezielle Rubriken ausgewählt werden und bereitgestellt werden. Bei diesen Benutzerinformationen handelt es sich um die Stellung im Betrieb, verwendete Marken und die Region, in der der Benutzer tätig ist. Auf der Grundlage dieser Informationen werden entsprechend kategorisierte Teaser ausgewählt, die vor dem Laden von Informationen, insbesondere HTML-Seiten, in diese Informationen integriert werden. Hierdurch wird der Benutzer automatisch mit neuen Informationen versorgt, ohne dass er sich bei besonderen Diensten anzumelden braucht oder mit EMails belästigt wird. Weiterhin kann die Auswahl dieser Mitteilungen zufällig erfolgen. Dies setzt jedoch voraus, dass eine Mitteilung keiner Kategorie zugeteilt werden konnte.

In weiteren Ausführungsformen werden weitere Details berücksichtigt, insbesondere das Geschlecht, das Alter oder das letzte Login.

Es wird darauf hingewiesen, dass alle Prozesse auf einem oder mehreren Servern ablaufen können. Durch die Verteilung auf mehrere Server wird sichergestellt, dass die Antwortzeiten in einem erträglichen Maß bleiben. Somit ist es z. B. möglich, dass Dienstleistungen wie die Buchhaltung durch andere Anbieter zur Verfügung gestellt werden, die entsprechend in die Menüstruktur integriert werden. Hierbei wird ebenfalls ein Austausch der Benutzerdaten sichergestellt.

Es wird darauf hingewiesen, dass alle sinnvollen Kombinationen von Merkmalen, die in den Ansprüchen erwähnt wurden, als offenbart gelten sollen, ohne dass die Rückbezüge eine einschränkende Funktion besitzen.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:
- Fig. 1: den grundsätzlichen Aufbau eines Netzwerkes, mit einem Client und mehreren Servern, die die Arbeit für die angebotenen Dienste ausführen;
- Fig. 2: den Aufbau einer Menüstruktur, die beim Client angezeigt wird, wobei unterschiedliche Teaser-Kategorien angezeigt werden;
- Fig. 3: die Eingabemaske für die Kriterien, die bei der Auswahl der Dienste und Teaser berücksichtigt werden;
- Fig. 4: einen Teil der Eingabemaske für die Berechnung der Rentabilität des Personals.

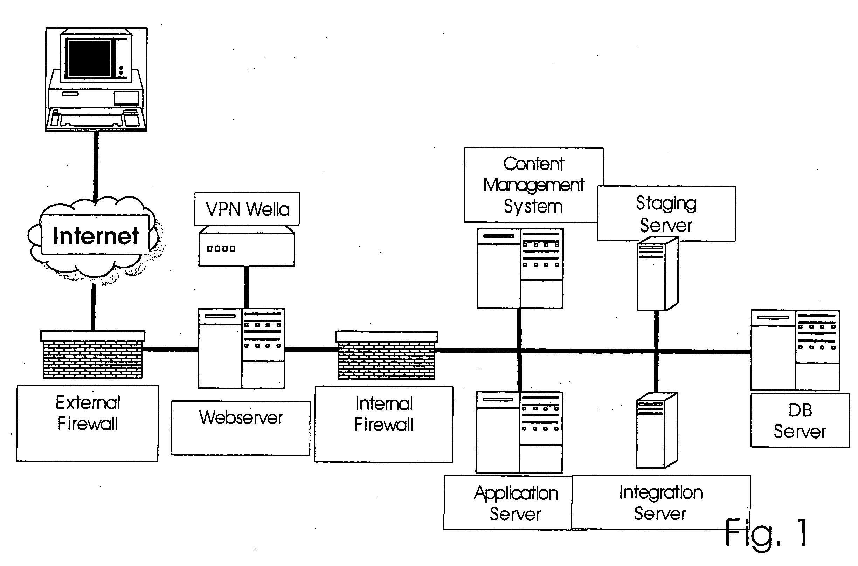

Fig. 1 zeigt einen Client, der über ein Netzwerk mit mehreren Servern verbunden ist, die wiederum auf einen Datenbankserver Zugriff haben. Der Zugriff auf den Datenbankserver muss nicht gemeinsam erfolgen, sondern kann vielmehr durch einen Server autorisiert werden. Die Server stellen die Dienste und Informationen bereit, die der Client benötigt, um sie über einen Browser darzustellen. Bei diesen Diensten handelt es sich vorzugsweise um Produktinformationen, Kalkulationen Checklisten, Vertragsvorlagen etc. Eine detailliertere Aufstellung findet sich oben. Die Figur soll nur zeigen, dass die Verteilung der Leistungen auf mehrere Server ohne Weiteres möglich ist, so kann z. B. ein Server die ganzen Berechnungen vornehmen, während ein anderer Server lediglich für die Bereitstellung von Dateien verantwortlich ist. Damit der Zugriff auch gesichert erfolgt, werden Benutzerinformationen ausgetauscht. Weitere mögliche Verteilungen sind denkbar, so kann z. B. die Berechnung und Simulation der Frisuren durch eine Hochleistungsmaschine erfolgen, während die Abarbeitung weniger anspruchsvoller Aufgaben durch einen kostengünstigeren Server erfolgt.

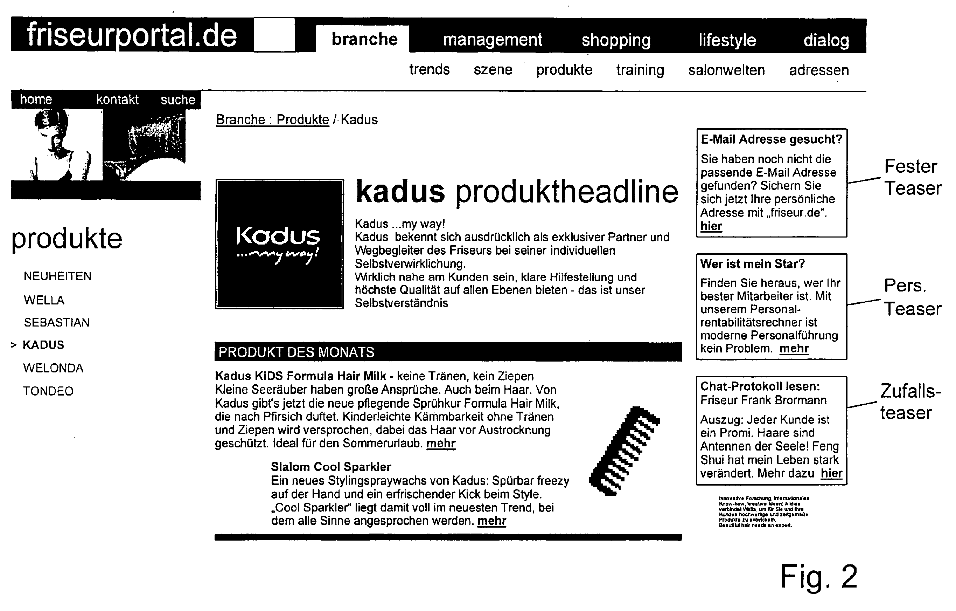

Fig. 2 zeigt den möglichen Aufbau einer Seite mit unterschiedlichen Teasern, die in unterschiedlichen Bereichen angeordnet sind. In Abhängigkeit der Informationen vom Benutzer werden entweder feste, persönliche oder Zufallsteaser erzeugt, die dann in die Seite eingefügt werden, bevor sie zum Benutzer übermittelt wird. Der Browser ist dann für die Darstellung verantwortlich. Weiterhin kann man der Darstellung den Menüaufbau entnehmen. Es wird darauf hingewiesen, dass ein Teaser jegliche Formen von Informationen darstellen kann, insbesondere auch Werbung.

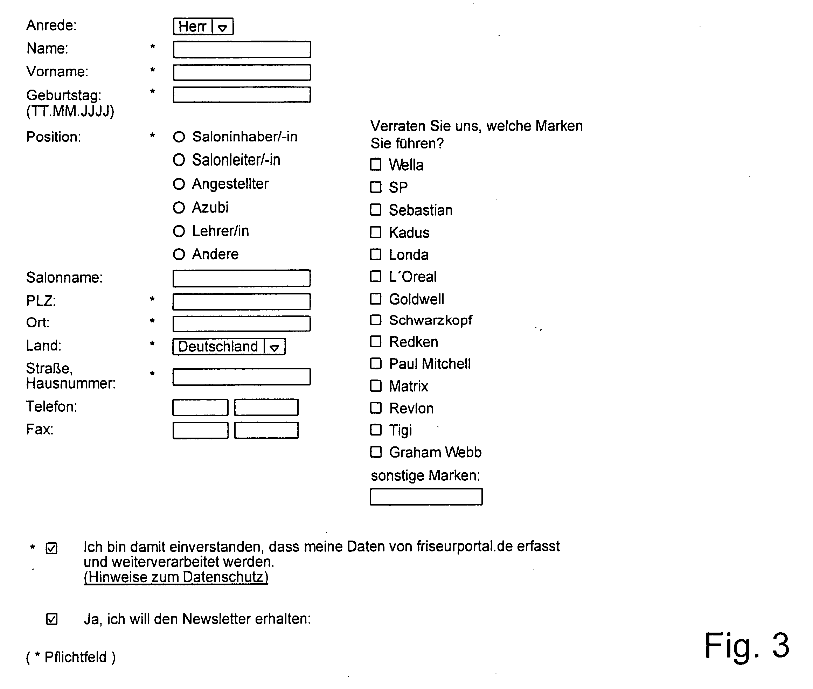

Fig. 3 zeigt die Informationen, die vom Benutzer benötigt werden, um mögliche Dienste und Teaser bereitzustellen. Anhand dieser Informationen werden Auswahloperationen vorgenommen. Weiterhin ist deutlich zu erkennen, dass für spezielle Marken-Produkte eine Erweiterung der Anfrage vorgesehen ist.

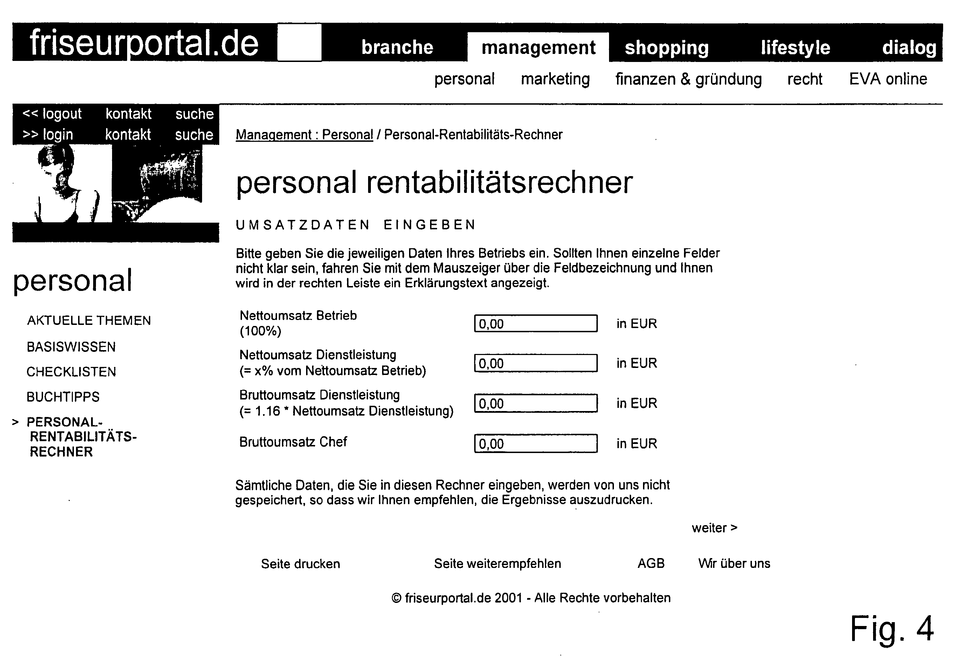

Fig. 4 zeigt einen Ausschnitt des Rentabilitätsrechners mit seiner entsprechenden Menümaske. In Eingabefelder können Werte eingegeben werden, die dann später vom Server berechnet werden, um sie dem Client aufbereitet zur Verfügung zu stellen. Die Rechneroperationen finden auf dem Server statt, während die Eingabe lediglich an den Server weitergeleitet wird.

## Patentansprüche

1. Server zur Bereitstellung von userspezifischen Informationen und Dienstleistungen über ein WAN, insbesondere das Internet,
wobei die Informationen so aufbereitet werden, dass auf Seiten des Abrufenden lediglich eine plattformunabhängige Software zur Darstellung der Informationen benötigt wird, insbesondere ein Browser,
wobei in Abhängigkeit der Identität des Benutzers und den damit verbundenen spezifischen und gespeicherten Benutzerinformationen unterschiedliche Informationen und Dienstleistungen für den beruflichen Tätigkeitsbereich, insbesondere den Friseurbereich, bereitgestellt werden, nämlich Teaser, Online-Kalkulationen, insbesondere Buchhaltung oder Rentabilitätskostenrechner, Produktinformationen und Online-Bestellmöglichkeiten.

2. Server nach dem vorhergehenden Anspruch, **dadurch gekennzeichnet, dass** weiterhin Checklisten für Personal, Marketing, Finanzen und/oder Gründung und/oder Formularsammlung und/oder aktuelle Rechtsprechung und/oder Informationen über aktuelle Trends und/oder Vertragsvorlagen, insbesondere Arbeitsvertrags- oder Leistungslohnvereinbarungen, vorhanden sind.

3. Server nach einem oder mehreren der vorhergehenden Ansprüche, **dadurch gekennzeichnet, dass** mindestens ein Teaser aufgrund einer personenspezifischen Information ausgewählt wurde.

4. Server nach einem oder mehreren der vorhergehenden Ansprüche, **dadurch gekennzeichnet, dass** die Informationen in Form von HTML, XML oder Flash, Java, Java-Script, .Net mit eingebetteten Grafiken übertragen werden.

5. Server nach einem oder mehreren der vorhergehenden Ansprüche, **dadurch gekennzeichnet, dass** Mittel vorhanden sind, die die serverseitigen Verfahrensschritte der in den Ansprüchen 10 bis 15 aufgeführten Verfahren umsetzen.

6. Server nach dem vorhergehenden Anspruch, **dadurch gekennzeichnet, dass** eine Schnittstelle besteht, um ein Foto eines Kunden zu übertragen, mit Hilfe dessen die Frisurensimulation durchgeführt wird.

7. Verfahren zur Bereitstellung von userspezifischen Informationen und Dienstleistungen über ein WAN, insbesondere das Internet, wobei die Informationen von einem Server so aufbereitet werden, dass auf Seiten eines abrufenden Clients lediglich eine plattformunabhängige Software zur Darstellung der Informationen benötigt wird, insbesondere ein Browser, mit folgenden Schritten:
- Überprüfung der Anmeldung und Identifizierung des Benutzers,
- Bestimmung der Zugriffsrechte, um anhand von spezifischen und gespeicherten Benutzerinformationen unterschiedliche Informationen und Dienstleistungen für den beruflichen Tätigkeitsbereich, insbesondere den Friseurbereich, bereitzustellen, indem abhängig von den Benutzerinformationen Navigationsinformationen übertragen werden, die durch den Browser angezeigt werden, wobei Teaser, Eingabemasken für Online-Kalkulationen, insbesondere Buchhaltung oder Rentabilitätskostenrechner, Vertragsvorlagen, insbesondere Arbeitsvertrags- oder Leistungslohnvereinbarungen, Produktinformationen und Online-Bestellmöglichkeiten dem Benutzer durch Übertragung von Menüstrukturen und Eingabemasken zur Auswahl gestellt werden,
- Entgegennahme der vom Benutzer vorgenommen Aktionen und/oder Eingaben über das Netzwerk,
- Analyse der Informationen durch den Server, der dann in Abhängigkeit der Ergebnisse der Analysen Aktionen durchführt, nämlich Auswahl von Teasern, Speicherung und Berechung von Daten für Online-Kalkulationen, Laden von Vertragsvorlagen, insbesondere Arbeitsvertrags- oder Leistungslohnvereinbarungen, Laden von Produktinformationen, Speicherung und ggf. Weiterleitung von Online-Bestellungen,
- Übertragung der Ergebnisse an den Client, der diese im Browser darstellen kann.

8. Verfahren nach dem vorhergehenden Anspruch, **dadurch gekennzeichnet, dass** weiterhin Checklisten für Personal, Marketing, Finanzen und/oder Gründung und/oder Formularsammlung und/oder aktuelle Rechtsprechung und/oder Informationen über aktuelle Trends geladen werden, um sie dann zu übertragen.

9. Verfahren nach einem oder mehreren der vorhergehenden Verfahrensansprüche, **dadurch gekennzeichnet, dass** ein Verfahren zur Simulation von Frisuren nach den Ansprüchen 12 bis 15 angeboten wird.

10. Verfahren zur Steuerung der Auswahl von Teasern durch einen Informations-Server im WAN, insbesondere einen Web-Server im Internet, bei dem anhand von Benutzerinformationen, nämlich Stellung im Betrieb, verwendete Marken und Region, entsprechend kategorisierte Teaser ausgewählt werden, die vor dem Laden von Informationen, insbesondere HTML-Seiten, in diese Informationen integriert werden.

11. Verfahren nach dem vorhergehenden Verfahrensanspruch, **dadurch gekennzeichnet, dass** das Geschlecht, das Alter, das letzte Login und/oder das Verhalten des Benutzers beim Zugriff und/oder bei der Suche auf der Homepage ausgewertet werden.

12. Verfahren zur Online-Simulation von Frisuren mit einem Server, der zentral in einem Netzwerk angeordnet ist und der Informationen für einen Client mit einem Browser aufbereitet,
wobei die Berechnungen auf dem Server mit folgenden Schritten erfolgen:
- Anmelden eines Clients mit Hilfe eines Browsers beim Server,
- Übersenden von Menü-Informationen an den Client, mit Hilfe derer der Browser ein Menü darstellen kann, wobei das Menü dem Benutzer die Auswahl gibt, typische Kopfformen auszuwählen oder ein Foto vom Client herunterzuladen, wobei das Menü dem Benutzer die Auswahl von unterschiedlichen Frisuren und/oder Färbungen und/oder Tönungen zur Verfügung stellt,
- Erzeugen eines Bildes auf der Grundlage der Auswahlinformationen, die übermittelt wurden, insbesondere der Kopfform der Frisur und/oder der Haarfarbe,
- Übermitteln des auf dem Server erzeugten Bildes an den Client, der dieses Bild im Browser darstellen kann.

13. Verfahren nach dem vorhergehenden Verfahrensanspruch, **dadurch gekennzeichnet, dass** bei der Übermittlung eines Bildes vom Client automatisch der Haaransatz durch den Server berechnet wird oder dass durch manuelle Auswahl der Haaransatz bestimmt wird.

14. Verfahren zur Online-Simulation von Frisuren mit einem Server, der zentral in einem Netzwerk angeordnet ist und der Informationen für einen Client mit einem Browser aufbereitet,
wobei die Berechnungen auf dem Client mit folgenden Schritten erfolgen:
- Anmelden eines Clients mit Hilfe eines Browsers beim Server,
- Laden eines im Browser ausführbaren Programms, insbesondere Applets oder signierten ActiveX-Controls,
- Laden von veränderbaren Informationen, nämlich der Frisuren und der Haarfarbe, durch das ausführbare Programm vom Server,
- Ezeugen eines Bildes auf der Basis von vorhandenen Kopfformen oder bereitgestellten Fotos.

15. Verfahren nach dem vorhergehenden Verfahrensanspruch, **dadurch gekennzeichnet, dass** der Haaransatz durch den Client oder durch manuelle Auswahl bestimmt wird.
